# EUROPEAN PATENT SPECIFICATION

(11) **EP 3 341 133 B1**
(45) Date of publication and mention of the grant of the patent: **09.09.2020**
(21) Application number: 16766371.5
(22) Date of filing: 29.07.2016
(51) Int. Cl.: B05B 15/00

(54) **COATING BOOTH**
BESCHICHTUNGSKABINE
CABINE DE REVÊTEMENT

(30) Priority: 24.08.2015 IT UB20153210
(43) Date of publication of application: 04.07.2018
(73) Proprietor: Siver S.r.l., 06073 Corciano (PG) Frazione Taverne (IT)
(72) Inventor: TOMASSONI, Luca, 06073 Corciano (PG) (IT)
(74) Representative: Brunacci, Marco
(86) International application number: PCT/IB2016/054543
(87) International publication number: WO 2017/033074

(56) References cited:
- EP-A1- 1 582 267
- WO-A1-02/078858
- JP-A- H10 202 208

## Description

### Technical Field

The present invention relates to a coating booth, in particular for powder coating.

### Background Art

Booths are known for coating different types of products and manufactured articles such as, e.g., automobile parts, door and window frames, furniture elements, etc..

Coating is a surface covering process carried out both for decorative purposes, coloring the elements to be coated, and for purposes of protection from corrosion, external agents, etc.

This process involves the realization of the covering by means of spraying of organic powders and synthetic resins which, by adhering to the surfaces, color the element subjected to coating.

Subsequently, the element is inserted in special kilns where, through heat treatment, powders and resins melt and polymerize to form the final covering layer.

Usually, known booths delimit the space in which coating takes place and are provided with walls that define the volume thereof.

In particular, in addition to the roof and to the floor, two front walls can be seen, openable to allow the access to the operators in charge, and two side walls provided with slits adapted to accommodate the coating devices, such as spray guns, nozzles, and the like.

Such devices are usually electronically controlled and have the function of spreading with powder the elements inserted in the booth.

The powder which does not adhere to the elements falls on the floor of the booth and is sucked by a suction system adapted to recover the fallen powder so as to be able to reuse it later.

Very often, for operational and logistical requirements, the same booth is intended to accommodate subsequent coating operations with powders different to those previously used, for example to obtain differently colored manufactured articles.

In this case, the various processing steps require color changes that, in addition to the replacement of the powders to be used, involve the complete internal cleaning of the booth.

In known booths, this operation requires the complete deactivation of the machinery to allow one or more operators to enter the booth and clean it.

A drawback of known booths is precisely linked to the cleaning operations, which are necessary before each change of color.

In fact, especially in coatings with frequent changes of color, the continuous and complex cleaning and maintenance operations involve an increase of the production times of the manufactured articles and of the relevant costs.

### Description of the Invention

The main aim of the present invention is to provide a coating booth which allows optimizing the cleaning step during the change of color.

One object of the present invention is to minimize the number of operators to be involved in the cleaning step and to optimize time and resources for the execution of the step itself.

Another object of the present invention is to provide a coating booth which allows overcoming the mentioned drawbacks of the prior art within the ambit of a simple, rational and easy solution, which is also effective to use.

The above mentioned objects are achieved by the present coating booth having the characteristics of claim 1.

Other coating booth are know from documents WO 02/078858, EP 1582267 e JP H10202208.

### Brief Description of the Drawings

Other characteristics and advantages of the present invention will become better evident from the description of two preferred but not exclusive embodiments of a coating booth, illustrated by way of an indicative, but non-limiting, example in the accompanying drawings, wherein:
Figure 1 is an axonometric view of the booth according to the invention;
Figures 2 and 3 are plan views of the booth according to the invention.

### Embodiments of the Invention

With particular reference to such figures, globally indicated by reference number 1 is a coating booth, in particular for powder coating.

The coating booth 1 comprises a coating compartment 2 adapted to accommodate the various processing steps required for the coating of the products to be coated such as, e.g., automobile parts, door and window frames, furniture elements, etc..

In particular, the coating compartment 2 rests on a bedplate 3 containing a suction system for powders adapted to take out of the compartment the excess powders in order to reuse them.

In the present embodiment, the compartment 2 has a prismatic shape and is defined by two pairs 4, 5 of opposite walls.

A first pair 4 is formed by walls having a surface orthogonal to a direction of advancement 6 for the input/output of products.

A second pair 5 is formed by walls having a surface parallel to the direction of advancement 6 and both having a slit 7 adapted to allow the insertion in the booth of suitable coating devices 8.

The latter are adapted to deliver, usually by spraying, coating powder so as to cover the surface of the products to be coated.

Different solutions cannot be ruled out wherein there are several slits 7, or wherein there is only one slit 7 formed on a single wall.

Other solutions cannot be ruled out wherein the compartment 2 has a different shape to that described above, e.g. having several walls, or having an asymmetric arrangement of the walls.

The booth comprises at least an access opening 9 adapted to allow the entry into the compartment 2.

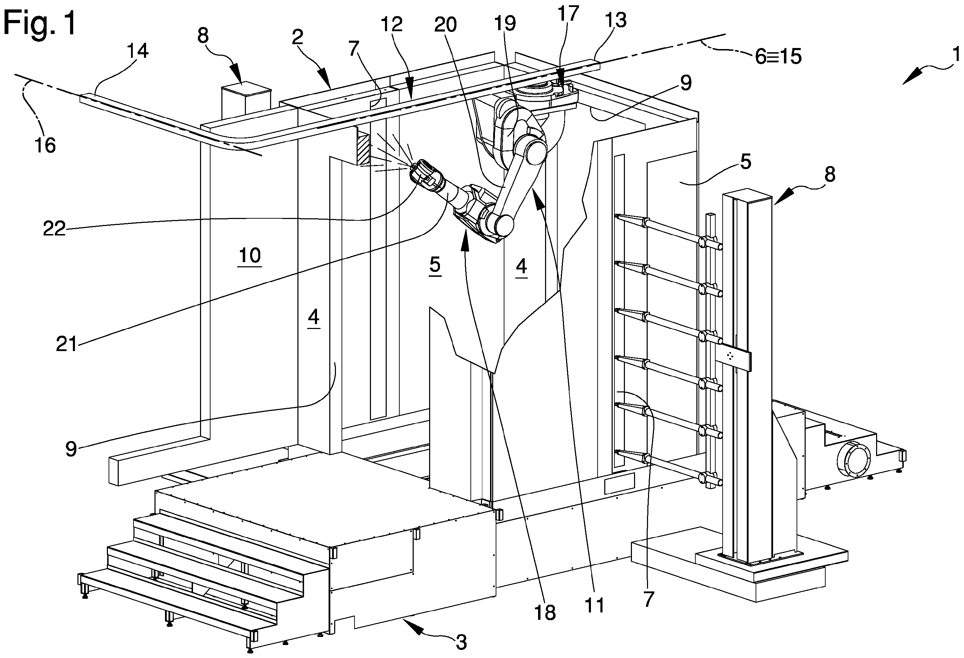

As illustrated in Figure 1, the access opening 9 is made at a wall of the first pair 4.

Conveniently, the compartment 2 has two access openings 9 made on both walls of the first pair 4 previously described.

This way the products, or operators, can enter and leave the compartment 2 following the direction of advancement 6 without having to go back.

Different solutions cannot be ruled out, for example wherein there is a single access opening 9 made on a single wall of the first pair 4, or wherein there are multiple accesses for each wall of the first pair.

A mixed solution cannot be ruled out either wherein the slits 7 are formed on the same walls provided with the access openings 9 and vice versa.

In the present embodiment, furthermore, the booth 1 comprises an auxiliary wall 10, placed adjacent to a wall of the first pair 4 and which extends externally to the compartment 2.

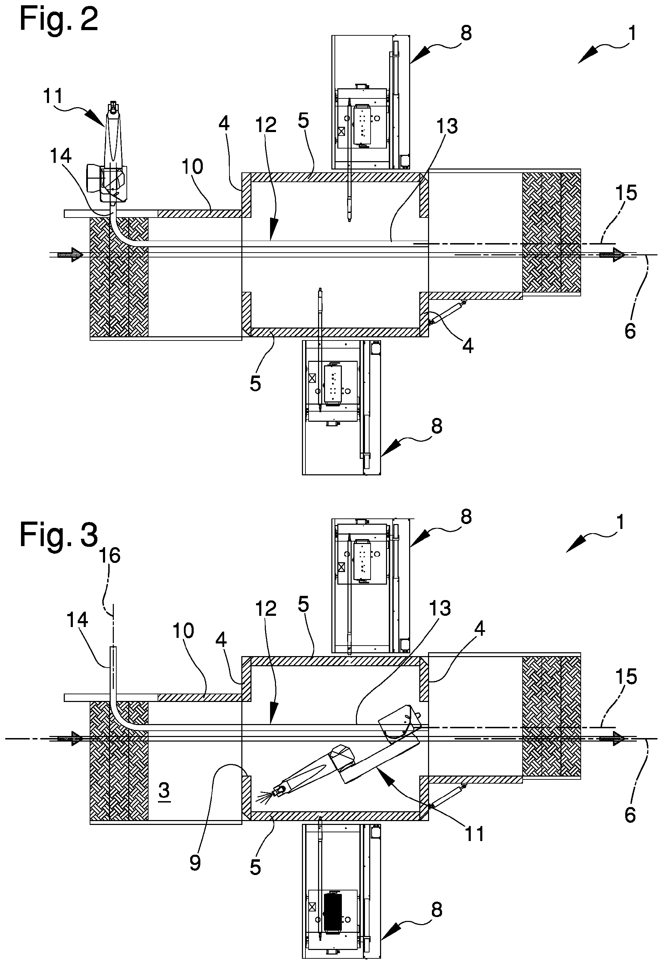

According to the invention, the booth 1 comprises cleaning means 11 of the compartment 2 movable between a rest configuration (Figure 2), wherein the cleaning means 11 are arranged outside the compartment 2, and a work configuration (Figure 3), wherein the cleaning means 11 are arranged at least partly inside the compartment 2.

The cleaning means 11 are adapted to clean the compartment 2 from the excess powders, used during the coating of the products, adhering to the compartment walls or onto the surfaces of the coating devices 8.

The cleaning means 11 are associated with a special guide element 12 mounted on top of the roof of the booth 1.

The guide element 12 is adapted to guide the cleaning means 11 through the access opening 9 both for the entry into the compartment 2, and for the exit from the compartment itself.

As illustrated in the figures, the guide element 12 comprises a first portion 13 adapted to be engaged with the cleaning means 11 in the work configuration. The guide element 12 also comprises a second portion 14 adapted to be engaged with the cleaning means 11 in the rest configuration.

The first portion 13 and second portion 14 extend along a first direction 15 and a second direction 16 respectively, substantially orthogonal to each other to define an "L" shape for the guide element 12, that is, a longitudinal profile that, seen from above, defines an "L".

As illustrated in Figure 1, the first direction 15 is parallel to the direction of advancement 6 and is connected to the second direction 16, which in turn extends orthogonally to said auxiliary wall 10.

Advantageously, the guide element 12 arranged on top of the roof of the booth 1 is made of a metallic beam, e.g. a beam of the "IPE" type, but other solutions having different structural elements cannot be ruled out, such as, e.g., longitudinal members, tubular elements, sliding rails, or the like.

In the present embodiment, the cleaning means 11 comprise a handling assembly 17 associated with the guide element 12 and adapted to slide along it so as to switch from the rest configuration to the work configuration and vice versa.

The handling assembly 17 is engaged with the guide element 12 in a sliding manner, i.e. being able to shift along it.

The cleaning means 11 also comprise a blowing device 18 mounted on the handling assembly 17 and adapted to blow a pressurized fluid into the compartment 2.

Conveniently, the blowing device 18 is rotatable and translatable with respect to the handling assembly 17.

Advantageously, the blowing device 18 is the type of a compressed air lance and the aforementioned pressurized fluid is, in fact, compressed air.

This way it is possible to spray a flow of air into the compartment 2, so as to remove the excess powder and, therefore, clean the surfaces affected by the flow itself.

In the present embodiment, the lance 18 which makes up the blowing device has a head 19 associated with the handling assembly 17 and rotatable relative thereto around its own axis, substantially vertical.

The lance also has a first connecting rod 20 with a first ending part hinged to the head 19 and a second ending part, opposite the first ending part, hinged to a second connecting rod 21.

The second connecting rod 21 has a first ending part hinged to the first connecting rod 20 and a second free ending part on which a nozzle 22 is mounted adapted to direct the flow of compressed air.

This configuration of the lance 18 allows a spherical omnidirectional movement of the nozzle 22, so as to direct the flow of compressed air towards all the points of the compartment 2 and enable the cleaning of the entire compartment. Advantageously, the nozzle 22 can be mounted on a pneumatic extension of the type of a pneumatic cylinder, to allow reaching the farthest points of the booth 1 and, if necessary, using a handling assembly 17 of smaller dimensions.

A solution cannot also be ruled out providing the lance 18 made of a single body piece associated with the handling assembly 17 by means of a ball joint, or solutions providing several lances 18 and several nozzles 22 mounted on one or more handling assemblies 17.

Solutions cannot be ruled out either, wherein the blowing device 18 is designed according to different mechanisms, provided they are able to send the flow of compressed air in all directions, as well as solutions providing blowing devices 18 able to work with fluids other than compressed air such as, e.g., water, air-water mixtures, or the like.

The cleaning means 11 can also comprise, alternatively or in addition to the blowing device, at least one cleaning medium of the type of a cloth, a sponge or the like, which is supported by said handling assembly 17 and is adapted to dry or wet clean said compartment 2 by contact.

Advantageously, the cleaning means 11 are connected to an electronic control unit, not illustrated in the figures, adapted to control the switch of same from the rest configuration to the work configuration and vice versa.

The electronic control unit is operatively connected both to the cleaning means 11, and to the other electronically controllable operating units, such as, e.g., the coating devices 8, or those closure elements, not illustrated in the figures, which are adapted to close the slit 7 and the access openings 9.

This way it is possible to program the cleaning of the compartment 2 during the change of color, by automating and coordinating the various operations composing the coating steps, including the cleaning of the compartment 2.

The operation of the present invention is as follows.

The electronic control unit, after receiving the information that the coating inside the compartment 2 has taken place, commands the cleaning means 11 to move from the second portion 14 to switch from the rest configuration to the work configuration.

The handling assembly 17 shifts along the path defined by the guide element 12, dragging in motion the blowing device 18.

The cleaning means 11 enter inside the compartment 2 through the access opening 9 and, at the first portion 13, move to the work configuration, with the handling assembly 17 that stops and the blowing device 18 that prepares itself for blowing compressed air.

In particular, the blowing device 18 rotates and shifts with respect to the handling assembly 17 thus allowing the flow of compressed air to reach every point inside the compartment 2.

Once the cleaning of the compartment 2 has finished, the electronic control unit brings the cleaning means 11 back to the rest configuration, causing the handling assembly 17 to run again the path defined by the guide element 12, but in the reverse direction.

It has in practice been found that the described invention achieves the intended objects and in particular the fact is underlined that the coating booth allows minimizing the number of operators to be involved.

The devised cleaning means, in fact, are automated and this makes unnecessary the presence of operators in charge of the cleaning of the coating compartment between one coating step and the other.

In addition, the devised booth allows optimizing time and resources for the execution of the cleaning operations.

The electronic control unit, in fact, allows programming and synchronizing the activation and deactivation of the cleaning means with the other members and devices of the booth, so as to manage to the best the execution times of the various steps, with consequent saving of costs and material.

## Claims

1. Coating booth (1) comprising:
- at least a coating compartment (2) able to accommodate the processing steps for the coating of products to be coated;
- at least an access opening (9) able to allow the entry into said compartment (2);
- cleaning means (11) of said compartment (2) movable between a rest configuration, wherein said cleaning means (11) are arranged outside said compartment (2), and a work configuration, wherein said cleaning means (11) are arranged at least partly inside said compartment (2);
- at least a guide element (12) able to guide said cleaning means (11) through said access opening (9) for the entry/exit of the cleaning means (11) themselves into/from said compartment (2);
wherein said cleaning means (11) comprise:
- a handling assembly (17) associated with said guide element (12) and able to slide along it between said rest configuration and said work configuration and vice versa;
- at least a blowing device (18) mounted on said handling assembly (17) and able to blow a pressurized fluid into said compartment (2);
**characterized in that** said blowing device (18) is rotatable and/or translatable with respect to said handling assembly (17).

2. Coating booth (1) according to one or more of the preceding claims, **characterized in that** said guide element (12) comprises at least a first portion (13) able to be engaged with said cleaning means (11) in said work configuration.

3. Coating booth (1) according to one or more of the preceding claims, **characterized in that** said guide element (12) comprises at least a second portion (14), able to be engaged with said cleaning means (11) in said rest configuration.

4. Coating booth (1) according to one or more of the preceding claims, **characterized in that** said first portion (13) and said second portion (14) extend along a first direction (15) and a second direction (16) substantially orthogonal to each other to define an "L" shape of said guide element (12).

5. Coating booth (1) according to one or more of the preceding claims, **characterized in that** said blowing device (18) is the type of a compressed air lance.

6. Coating booth (1) according to one or more of the preceding claims, **characterized in that** said cleaning means (11) comprise at least a cleaning medium of the type of a cloth, a sponge or the like, supported by said handling assembly (17) and able to clean said compartment (2) by contact.

7. Coating booth (1) according to one or more of the preceding claims, **characterized in that** said cleaning means (11) are connected to an electronic control unit able to control the switch from said rest configuration to said work configuration and vice versa.

## Patentansprüche

1. Beschichtungskabine (1) umfassend:
- mindestens ein Beschichtungsabteil (2), das die Verarbeitungsschritte für die Beschichtung der zu beschichtenden Produkte aufnehmen kann;
- mindestens eine Zugangsöffnung (9), die den Eintritt in dieses Abteil (2) ermöglicht;
- Reinigungsmittel (11) des Abteils (2), die zwischen einer Ruhekonfiguration, in der die Reinigungsmittel (11) außerhalb des Abteils (2) angeordnet sind, und einer Arbeitskonfiguration, in der die Reinigungsmittel (11) zumindest teilweise innerhalb des Abteils (2) angeordnet sind, bewegbar sind;
- mindestens ein Führungselement (12), das die Reinigungsmittel (11) durch die Zugangsöffnung (9) für den Eingang/Ausgang der Reinigungsmittel (11) selbst in das/aus dem Abteil (2) führen kann;
- die Reinigungsmittel (11) umfass:
- eine Handhabungsbaugruppe (17), die mit dem Führungselement (12) verbunden ist und daran entlang zwischen der Ruhekonfiguration und der Arbeitskonfiguration und umgekehrt gleiten kann;
- mindestens eine Blasvorrichtung (18), die an der Handhabungsbaugruppe (17) angebracht ist und ein unter Druck stehendes Fluid in das Abteil (2) blasen kann;
**dadurch gekennzeichnet, dass** die Blasvorrichtung (18) in Bezug auf die Handhabungsbaugruppe (17) drehbar und/oder verschiebbar ist.

2. Beschichtungskabine (1) gemäß einem oder mehreren der vorhergehenden Ansprüche, **dadurch gekennzeichnet, dass** das Führungselement (12) mindestens einen ersten Abschnitt (13) umfasst, der mit den Reinigungsmitteln (11) in der Arbeitskonfiguration in Eingriff gebracht werden kann.

3. Beschichtungskabine (1) gemäß einem oder mehreren der vorhergehenden Ansprüche, **dadurch gekennzeichnet, dass** das Führungselement (12) mindestens einen zweiten Abschnitt (14) umfasst, der mit den Reinigungsmitteln (11) in der Ruhekonfiguration in Eingriff gebracht werden kann.

4. Beschichtungskabine (1) gemäß einem oder mehreren der vorhergehenden Ansprüche, **dadurch gekennzeichnet, dass** sich der erste Abschnitt (13) und der zweite Abschnitt (14) entlang einer ersten Richtung (15) und einer zweiten Richtung (16) erstrecken, die im Wesentlichen orthogonal zueinander sind, um eine "L"-Form des Führungselements (12) zu definieren.

5. Beschichtungskabine (1) nach einem oder mehreren der vorstehenden Ansprüche, **dadurch gekennzeichnet, dass** die Blasvorrichtung (18) von der Art einer Druckluftlanze ist.

6. Beschichtungskabine (1) gemäß einem oder mehreren der vorstehenden Ansprüche, **dadurch gekennzeichnet, dass** die Reinigungsmittel (11) mindestens ein Reinigungsmedium vom Typ eines Tuches, Schwammes oder dergleichen umfassen, das von der Handhabungsbaugruppe (17) gestützt wird und das das Abteil (2) durch Kontakt reinigen kann.

7. Beschichtungskabine (1) gemäß einem oder mehreren der vorhergehenden Ansprüche, **dadurch gekennzeichnet, dass** die Reinigungsmittel (11) mit einer elektronischen Steuereinheit verbunden sind, die den Wechsel von der Ruhekonfiguration zur Arbeitskonfiguration und umgekehrt steuern kann.

## Revendications

1. Cabine de revêtement (1) comprenant :
- au moins un compartiment de revêtement (2) capable de réaliser les étapes de traitement pour le revêtement de produits devant être revêtus ;
- au moins une ouverture d'accès (9) capable de permettre l'entrée dans ledit compartiment (2) ;
- des moyens de nettoyage (11) dudit compartiment (2) mobiles entre une configuration de repos, dans laquelle lesdits moyens de nettoyage (11) sont agencés à l'extérieur dudit compartiment (2), et une configuration de travail, dans laquelle lesdits moyens de nettoyage (11) sont agencés au moins partiellement à l'intérieur dudit compartiment (2) ;
- au moins un élément guide (12) capable de guider lesdits moyens de nettoyage (11) à travers ladite ouverture d'accès (9) pour l'entrée/sortie des moyens de nettoyage (11) eux-mêmes dans ledit/hors dudit compartiment (2) ;
lesdits moyens de nettoyage (11) comprend :
-- un ensemble de manipulation (17) associé audit élément guide (12) et capable de glisser le long de celui-ci entre ladite configuration de repos et ladite configuration de travail et vice versa ;
-- au moins un dispositif de soufflage (18) monté sur ledit ensemble de manipulation (17) et capable de souffler un fluide sous pression dans ledit compartiment (2) **caractérisée en ce que** ledit dispositif de soufflage (18) est rotatif et/ou translatable par rapport audit ensemble de manipulation (17).

2. Cabine de revêtement (1) selon une ou plusieurs des revendications précédentes, **caractérisée en ce que** ledit élément guide (12) comprend au moins une première partie (13) capable d'être mise en prise avec lesdits moyens de nettoyage (11) dans ladite configuration de travail.

3. Cabine de revêtement (1) selon une ou plusieurs des revendications précédentes, **caractérisée en ce que** ledit élément guide (12) comprend au moins une seconde partie (14), capable d'être mise en prise avec lesdits moyens de nettoyage (11) dans ladite configuration de repos.

4. Cabine de revêtement (1) selon une ou plusieurs des revendications précédentes, **caractérisée en ce que** ladite première partie (13) et ladite seconde partie (14) s'étendent le long d'une première direction (15) et d'une seconde direction (16) sensiblement orthogonales l'une par rapport à l'autre pour définir une forme de « L » dudit élément guide (12).

5. Cabine de revêtement (1) selon une ou plusieurs des revendications précédentes, **caractérisée en ce que** ledit dispositif de soufflage (18) est du type lance à air comprimé.

6. Cabine de revêtement (1) selon une ou plusieurs des revendications précédentes, **caractérisée en ce que** lesdits moyens de nettoyage (11) comprennent au moins un support de nettoyage du type tissu, éponge ou autre, soutenu par ledit ensemble de manipulation (17) et capable de nettoyer ledit compartiment (2) par contact.

7. Cabine de revêtement (1) selon une ou plusieurs des revendications précédentes, **caractérisée en ce que** lesdits moyens de nettoyage (11) sont connectés à une unité de commande électronique capable de commander le passage de ladite configuration de repos à ladite configuration de travail et vice versa.
